# EUROPÄISCHE PATENTSCHRIFT

(11) **EP 4 219 305 B1**
(45) Veröffentlichungstag und Bekanntmachung des Hinweises auf die Patenterteilung: **04.09.2024**
(21) Anmeldenummer: 22154253.3
(22) Anmeldetag: 31.01.2022
(51) Int. Cl.: B64D 11/00, F16B 37/08

(54) **BEFESTIGUNGSVORRICHTUNG ZUM BEFESTIGEN EINER AUSSTATTUNGSKOMPONENTE AN EINER ANBINDUNGSSTRUKTUR EINER LUFTFAHRZEUGKABINE**
FASTENING DEVICE FOR FASTENING AN EQUIPMENT COMPONENT TO AN ATTACHMENT STRUCTURE OF AN AIRCRAFT CABIN
DISPOSITIF DE FIXATION PERMETTANT DE FIXER UN COMPOSANT D'ÉQUIPEMENT À UNE STRUCTURE DE LIAISON D'UNE CABINE D'AÉRONEF

(43) Veröffentlichungstag der Anmeldung: 02.08.2023
(73) Patentinhaber: Airbus Operations GmbH, 21129 Hamburg (DE)
(72) Erfinder: HEGENBART, Matthias, 21129 Hamburg (DE); BENTHIEN, Hermann, 21129 Hamburg (DE)
(74) Vertreter: LKGLOBAL Lorenz & Kopf Patentanwalt Attorney at Law PartG mbB

(56) Entgegenhaltungen:
- WO-A1-2006/123844
- DE-A1- 102019 101 401

## Beschreibung

### Technisches Gebiet

Die vorliegende Beschreibung betrifft eine Befestigungsvorrichtung zum Befestigen einer Ausstattungskomponente an einer Anbindungsstruktur einer Luftfahrzeugkabine, eine Kabine aufweisend mindestens eine darin befestigte Ausstattungskomponente und ein Luftfahrzeug mit einer derartigen Kabine und/oder einer derartigen Befestigungsvorrichtung.

### Technischer Hintergrund

In einem Verkehrsflugzeug wird üblicherweise eine Passagierkabine mit einer Vielzahl von Ausstattungskomponenten vorgesehen. Der mithilfe einer Rumpfstruktur aufgebaute Rumpf wird hierzu an seiner Innenseite mit einer Vielzahl von Haltern versehen, die individuell auf die aufzunehmenden Ausstattungskomponenten abgestimmt sind. Bei Rumpflängen von weit über 10 m ist jedoch stets mit gewissen Fertigungstoleranzen zu rechnen, die bei der Anordnung von Haltern berücksichtigt werden müssen. Während Ausstattungskomponenten in dem Rumpf eine klar vorgegebene Geometrie erfüllen sollen, ist daher eine Anpassung der individuellen Halter zum Ausgleich der Herstellungstoleranzen der Rumpfstruktur durchzuführen.

Das Ausgleichen derartiger Toleranzen zur Anpassung der sichtbaren Kontur im Innern einer Kabine eines Luftfahrzeugs ist zeitaufwändig und kann das Öffnen und Schließen von Verschraubungen erfordern.

Aus DE102019101401A1 ist ein Befestigungssystem zum Befestigen von Komponenten an einer Rumpfstruktur in einem Innenraum eines Luftfahrzeugs bekannt, wobei das Befestigungssystem mindestens einen mit der Rumpfstruktur koppelbaren Halter, eine Haltestrebe, die mit einem ersten Ende mit dem Halter verbindbar ist und mit einem zweiten Ende mit einer Ausstattungskomponente oder einem Halteelement für eine Ausstattungskomponente verbindbar ist und einen länglichen Basiskörper aufweist. Der längliche Basiskörper ist an mehreren ersten und/oder zweiten Haltern befestigbar und dazu ausgebildet, eine entlang einer Erstreckungsachse des Basiskörpers wirkende Kraft in mehrere erste bzw. zweite Halter einzuleiten. Ferner ist ein Entkopplungsbauteil zwischen Basiskörper und Haltestrebe eingebracht und zumindest teilweise ringförmig ausgebildet.

Aus DE102020108392A1 ist eine Befestigungsvorrichtung bekannt, die eine entkoppelte rotatorische Anbindung von Kabineninnenbauteilen an einer Anbindungsstruktur erlaubt, die von einer Primärstruktur des Luftfahrzeugs gestützt wird. Die Befestigungsvorrichtung umfasst eine Innenhülse, die über ein vorgegebenes Befestigungsrohr gesteckt werden kann. Eine Außenhülse kann drehbar an der Innenhülse befestigt werden. Die Außenhülse weist eine Nut zum Zentrieren des Gepäckfachs auf. Die Zentrierung erfolgt mittels eines Halteelements, das auf die Außenhülse aufgeschoben wird. Die Befestigungsvorrichtung kann Toleranzen zwischen der Anbindungsstruktur und dem Kabineninnenbauteil ausgleichen und die Übertragung unerwünschter Kräfte und Momente unterbinden.

### Beschreibung

Es kann als Aufgabe betrachtet werden, eine alternative Befestigungsvorrichtung vorzuschlagen, die auf Basis einer Anbindungsstruktur eine schnelle und stufenlos toleranzausgleichende Befestigung von Ausstattungskomponenten ermöglicht.

Diese Aufgabe wird gelöst durch den Gegenstand des unabhängigen Anspruchs 1. Weitere Ausführungsformen ergeben sich aus den abhängigen Ansprüchen sowie aus der folgenden Beschreibung.

Es wird eine Befestigungsvorrichtung zum Befestigen einer Ausstattungskomponente an einer Anbindungsstruktur einer Luftfahrzeugkabine vorgeschlagen, wobei die Anbindungsstruktur mindestens ein Befestigungsrohr mit einer Längsachse aufweist, die Befestigungsvorrichtung aufweisend eine Gewindehülse, die eine Innenbohrung aufweist, mit der Innenbohrung drehbar auf dem Befestigungsrohr positionierbar ist und ein Außengewinde aufweist, einen mit der Ausstattungskomponente verbindbaren Haltekörper mit zwei voneinander beabstandeten Schenkeln und eine von den Schenkeln eingeschlossene Auflagefläche, an der ein an das Außengewinde der Gewindehülse angepasstes Innengewinde angeordnet ist, und eine Fixiereinrichtung zum Fixieren des Haltekörpers an der Gewindehülse und dem Befestigungsrohr, wobei das Außengewinde und das Innengewinde nicht selbsthemmend sind, sodass beim Andrücken des Innengewindes des Haltekörpers auf das Außengewinde der Gewindehülse die Gewindehülse rotiert, bis das Außengewinde und das Innengewinde miteinander fluchten, und wobei die Fixiereinrichtung dazu ausgebildet ist, die Gewindehülse drehfest mit dem Haltekörper zu verbinden und den Haltekörper quer zu der Längsachse des Befestigungsrohrs zu fixieren.

Die erfindungsgemäße Befestigungsvorrichtung ist in der Lage, einen stufenlosen Toleranzausgleich beim Befestigen einer Ausstattungskomponente in einer Kabine eines Luftfahrzeugs zu ermöglichen, bei gleichzeitig automatischer Zentrierung von Befestigungsmitteln aneinander. Hierzu wird eine Anbindungsstruktur vorausgesetzt, die in Form von Befestigungsrohren an einer Struktur des betreffenden Luftfahrzeugs angeordnet ist und parallel zu einer Längsrichtung der Kabine verläuft. Die Befestigung der Anbindungsstruktur ist dabei für den Gegenstand dieser Beschreibung unerheblich und wird daher nicht konkret ausgeführt.

Die Gewindehülse ist ein hohlzylindrisches Bauteil, das eine Innenbohrung aufweist, durch das sich das Befestigungsrohr erstreckt. In einer Ausführungsform kann die Gewindehülse direkt auf dem Befestigungsrohr drehbar angeordnet sein.

Es ist auch denkbar, mindestens ein weiteres Element zwischen der Gewindehülse und dem Befestigungsrohr anzuordnen und hierdurch eine Drehbarkeit und gegebenenfalls eine Fixierung der Gewindehülse zu erreichen. Das Außengewinde weist eine geeignete Gewindesteigung auf, um eine Selbsthemmung zu verhindern. Neben der eigentlichen Gewindesteigung ist auch der Reibwert des Gewindes und folglich des Materials abhängig, aus dem die Gewindehülse bzw. der Haltekörper gefertigt sind und wird zur Realisierung der Befestigungsvorrichtung entsprechend angepasst.

Der Haltekörper ist ein Element, das an der zu befestigenden Ausstattungskomponente anbringt ist. Es ist dabei sinnvoll, mehrere Haltekörper an jeder Ausstattungskomponente anzubringen, um eine sichere Halterung zu erreichen. Aus DE102020108392A1 ist beispielsweise bekannt, im Wesentlichen C-förmige Haltekörper an der Ausstattungskomponente anzuordnen und diese durch Heranführen an das Befestigungsrohr in daran angeordnete Beschläge einzurasten. Erfindungsgemäß kann der Haltekörper ebenso C-förmig ausgebildet sein und beispielsweise zwei voneinander beabstandete und parallel zueinander angeordnete Schenkel aufweisen, zwischen denen die Auflagefläche angeordnet ist und sich beispielhaft über 180° der Auflagefläche erstreckt. Dieser Bereich korreliert mit der Gewindehülse und weist ein an das Außengewinde angepasstes Innengewinde auf. Die Auflagefläche lässt sich folglich auf das Außengewinde legen.

Bei fluchtender Ausrichtung des Innengewindes und des Außengewindes greifen das Innengewinde und das Außengewinde vollständig ineinander ein und der Gewindegrund des Innengewindes befindet sich in einem geringstmöglichen Abstand zu Gewindeflanken des Außengewindes und umgekehrt. Eine derart fluchtende Anordnung ist beim blinden Heranführen des Haltekörpers an das Befestigungsrohr jedoch nur in Ausnahmefällen zu erwarten. Kämmen das Innengewinde und das Außengewinde nicht, üben die Flanken des Innengewindes eine in axialer Richtung wirkende Kraft auf die Flanken des Außengewindes aus.

Dadurch erfolgt aufgrund der fehlenden Selbsthemmung eine Rotation der Gewindehülse. Die Rotation endet genau dann, wenn das Innengewinde und das Außengewinde miteinander fluchten. Dann liegen die beiden Gewinde bündig in- bzw. aufeinander und der Haltekörper befindet sich in der vorgesehenen Endposition. Wird die Rotation der Gewindehülse unterbunden, kann eine Kraftübertragung zwischen den Gewindeflanken des Innengewindes und des Außengewindes erfolgen.

Die Fixiereinrichtung dient dazu, die Gewindehülse in der endgültigen Position des Haltekörpers zu fixieren, sodass eine weitere Rotation ausgeschlossen wird. Durch zusätzliche Fixierung des Haltekörpers quer zu der Längsachse des Befestigungsrohrs kann dessen Position zu dem Befestigungsrohr ebenso arretiert werden, sodass Kräfte quer zu der Längsachse zwischen dem Befestigungsrohr und dem Haltekörper übertragbar sind.

Da völlig unabhängig von einer toleranzbehafteten, axialen Anfangsposition des Haltekörpers beim Heranführen der Ausstattungskomponente ein bündiges Eingreifen der Gewinde ineinander erzielt wird, kann ein stufenloser Ausgleich von fertigungsbedingten Toleranzen für die Position des Haltekörpers entlang der Längsachse des Befestigungsrohrs erreicht werden. Durch die Ausgestaltung des Haltekörpers wird zudem eine automatische Zentrierung des Haltekörpers an das Befestigungsrohr erzielt. Nach dem Toleranzausgleich wird der Haltekörper durch die Fixiereinrichtung an dem Befestigungsrohr fixiert und Kräfte in axialer Richtung und quer zu dem Befestigungsrohr können übertragen werden.

Die erfindungsgemäße Befestigungsvorrichtung weist folglich deutliche Vorteile gegenüber dem bekannten Stand der Technik auf, da neben einer raschen Montage ein stufenloser Toleranzausgleich und eine Zentrierung bei blinder Montage sehr rasch und zuverlässig durchführbar ist.

In einer vorteilhaften Ausführungsform ist die Gewindehülse in Axialrichtung an dem Befestigungsrohr fixiert. Damit wird eine Axialposition der Gewindehülse fixiert. Es ist dabei vorstellbar, dass das Befestigungsrohr mehrere, in Längsrichtung aufeinanderfolgende Rastvertiefungen aufweist, in denen Rastmittel zum axialen Fixieren der Gewindehülse verrastbar sind. Bei der Endmontage kann folglich ein Befestigungsrohr mit mehreren Gewindehülsen ausgestattet werden, die auf das Befestigungsrohr aufgeschoben werden. Anschließend können die Gewindehülsen zu vorgesehenen Positionen entlang des Befestigungsrohrs verschoben und dort an einer entsprechenden Rastvertiefung verrastet werden. Die Rastvertiefungen sind bevorzugt äquidistant an dem Befestigungsrohr verteilt und könnten etwa einen Abstand von 1 Zoll zueinander aufweisen. Selbstverständlich sind andere Ausführungen grundsätzlich möglich.

In einer vorteilhaften Ausführungsform weist das Befestigungsrohr eine Queröffnung auf, wobei die Fixiereinrichtung ein Zylinderbuchsenelement aufweist, das in dem Befestigungsrohr angeordnet ist und eine zu der Längsachse quer verlaufende Aufnahmebuchse umfasst, und wobei die Fixiereinrichtung einen Kugelsperrbolzen aufweist, der durch den Haltekörper, die Gewindehülse und die Queröffnung in die Aufnahmebuchse einführbar und darin fixierbar ist. Das Zylinderbuchsenelement ist folglich wie eine Zylindermutter ausgeführt und befindet sich innerhalb des Befestigungsrohrs. Statt eines Aufnahmegewindes ist hier eine Aufnahmebuchse vorgesehen, die sich quer zu der Längsachse des Befestigungsrohrs bzw. des Zylinderbuchsenelements erstreckt. Zum Einstecken des Kugelsperrbolzens ist die Zylinderbuchsenelement so zu positionieren, dass seine Aufnahmebuchse mit der Queröffnung fluchtet. Der Kugelsperrbolzen kann sich dann quer zu der Längsachse des Befestigungsrohrs durch den Haltekörper, die Gewindehülse und die Queröffnung in die Aufnahmebuchse hinein erstrecken. Der Kugelsperrbolzen weist an seinem einzuführenden Ende eine quer zu einer Haupterstreckungsrichtung des Kugelsperrbolzens bewegbare Kugel auf. Zum Einstecken des Kugelsperrbolzens ist die Kugel in den Kugelsperrbolzen einzufahren, sodass das einzuführende Ende eine geringstmögliche Breite aufweist. Ist der Kugelsperrbolzen in der Aufnahmebuchse positioniert, kann die Kugel ausgefahren werden, um den Kugelsperrbolzen in der Aufnahmebuchse zu fixieren. Dadurch kann er ohne Lösen der Kugel nicht aus dem Zylinderbuchsenelement herausgezogen werden, sodass der Haltekörper in Querrichtung fixiert ist.

In einer vorteilhaften Ausführungsform weist der Kugelsperrbolzen eine Kugel auf, die mittels eines aktiven, elektrisch betreibbaren Antriebs in eine gelöste Stellung bringbar ist und dazu ausgebildet ist, in eine gesperrte Stellung zurückzudrängen. Der Kugelsperrbolzen kann bei der Montage der Ausstattungskomponente von Hand oder mit einem Werkzeug quer zu den Befestigungsrohr verschoben werden. Dabei ist erforderlich, die Kugel einzufahren und anschließend wieder auszufahren. Zur Erleichterung der Montage kann hierfür ein elektrischer Antrieb vorgesehen sein, der die Bewegung der Kugel steuert. Es ist insbesondere günstig, wenn der elektrische Antrieb so ausgestaltet ist, dass er die Kugel lediglich einfahren oder lösen kann und in einem nicht betriebenen Zustand die Kugel stets in ihre ausgefahrene Position drängt. Die Kugel könnte etwa federnd an dem Kugelsperrbolzen angeordnet sein und der elektrische Antrieb dazu ausgebildet sein, die Kugel gegen die Federkraft einzufahren. Sämtliche Kugelsperrbolzen aller zu befestigenden Ausstattungskomponenten könnten mit einer elektrischen Montageleitung gekoppelt sein, die mit einer mobilen Spannungsquelle verbindbar ist. Dann fahren die Kugeln der zu befestigenden Ausstattungskomponenten ein bzw. werden gelöst. Die Ausstattungskomponenten werden an die Gewindehülsen angenähert und dort befestigt, anschließend kann die Spannungsquelle wieder getrennt werden. Dies erleichtert den Aufbau der Befestigungsvorrichtung, da eine Zugänglichkeit für Werkzeug oder die Hand eines Monteurs nicht vorgesehen sein muss. Für die Realisierung des elektrischen Antriebs können unterschiedliche Varianten in Erwägung gezogen werden.

In einer vorteilhaften Ausführungsform umfasst der Antrieb ein elektroaktives Polymer, das mit einer Spannungsquelle verbindbar ist, sodass ein Einstecken des Kugelsperrbolzens in das Zylinderbuchsenelement ermöglicht wird. Beim Anlegen einer Spannung kann das elektroaktive Polymer eine Kontraktion durchführen, die in diesem Falle zum Zurückziehen der Kugel genutzt wird. Ein entsprechendes Bauteil aus einem elektroaktiven Polymer kann innerhalb des Kugelsperrbolzens angeordnet und mit der Kugel gekoppelt sein. Wird eine Spannung angelegt, kontrahiert sich das entsprechende Bauteil und durch Kopplung mit der Kugel wird diese zurückgezogen oder gelöst. Die Kopplung kann eine direkte Verbindung oder eine indirekte Verbindung umfassen. Beispielsweise ist denkbar, dass eine die Kugel in eine ausgefahrene Position drängende Feder direkt mit einem Bauteil aus einem elektroaktiven Polymer gekoppelt ist. Durch Kontraktion des Bauteils wird auch die Feder kontrahiert, sodass die Kugel nicht mehr nach außen gedrängt wird, sondern beim Einschieben des Kugelsperrbolzens in das Zylinderbuchsenelement diese Bewegung nicht sperrt.

In einer vorteilhaften Ausführungsform umfasst die Gewindehülse mehrere Längsschlitze in dem Außengewinde, die parallel zu der Längsachse verlaufen, wobei die Fixiereinrichtung eine Zahnplatte aufweist, die quer zu der Längsachse auf die Längsschlitze bewegbar ist. Hierdurch wird die Funktion des Außengewindes nicht beeinträchtigt. Stattdessen entsteht eine zusätzliche Möglichkeit, mit der Gewindehülse zu interagieren. Die Gewindehülse kann auf ihrer Mantelfläche mehrere, voneinander beanstandete und parallel zu der Längsachse ausgerichtete Schlitze umfassen. Diese sind bevorzugt äquidistant zueinander angeordnet und auf der Mantelfläche verteilt. Durch Formschluss zwischen der Zahnplatte und mindestens einem der Schlitze kann einer Rotation der Gewindehülse entgegengewirkt werden. Es ist vorstellbar, dass die Fixiereinrichtung daher eine Zahnplatte mit mehreren, voneinander beanstandeten Zähnen umfasst, die in die Schlitze der Gewindehülse eingreifen können. Dies könnte bereits durch Annähern der Fixiervorrichtung an die Gewindehülse erreicht werden. Abhängig von der Anzahl der Schlitze und der Größe der Zähne der Zahnplatte kann eine Justierung der axialen Position mit einer Auflösung im Bereich von wenigen Hundertstel Millimetern erreicht werden.

In einer vorteilhaften Ausführungsform ist das Zylinderbuchsenelement in das Befestigungsrohr mittels einer biegeweichen, elastischen Masse eingeklebt. Folglich ist das Zylinderbuchsenelement an einer vorgegebenen Position eingeklebt, erlaubt jedoch aufgrund der Elastizität der Masse eine gewisse Bewegbarkeit. Durch die elastische Masse wird eine Dämpfungsfunktion erreicht, sodass das Zylinderbuchsenelement in dem Befestigungsrohr nicht klappert und stoßartige Belastungen abgemildert werden können.

Die Erfindung betrifft weiterhin eine Kabine für ein Luftfahrzeug, aufweisend mindestens eine Ausstattungskomponente, die mittels mindestens einer Befestigungsvorrichtung nach der vorhergehenden Beschreibung in der Kabine befestigt ist.

Weiterhin betrifft die Erfindung ein Luftfahrzeug, aufweisend mindestens eine Befestigungsvorrichtung gemäß der vorhergehenden Beschreibung und/oder mindestens eine vorangehend beschriebene Kabine.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1 und 2: eine schematische Darstellung einer Befestigungsvorrichtung in zwei aufeinanderfolgenden Montageschritten gemäß einem ersten Ausführungsbeispiel.
- Fig. 3a-3b: Details zu dem ersten Ausführungsbeispiel in zwei unterschiedlichen Darstellungen.
- Fig. 4: eine alternative Verdrehsicherung.
- Fig. 5: ein weiteres Ausführungsbeispiel mit integriertem Schockabsorber.
- Fig. 6: ein Flugzeug.

### Detaillierte Beschreibung von Ausführungsbeispielen

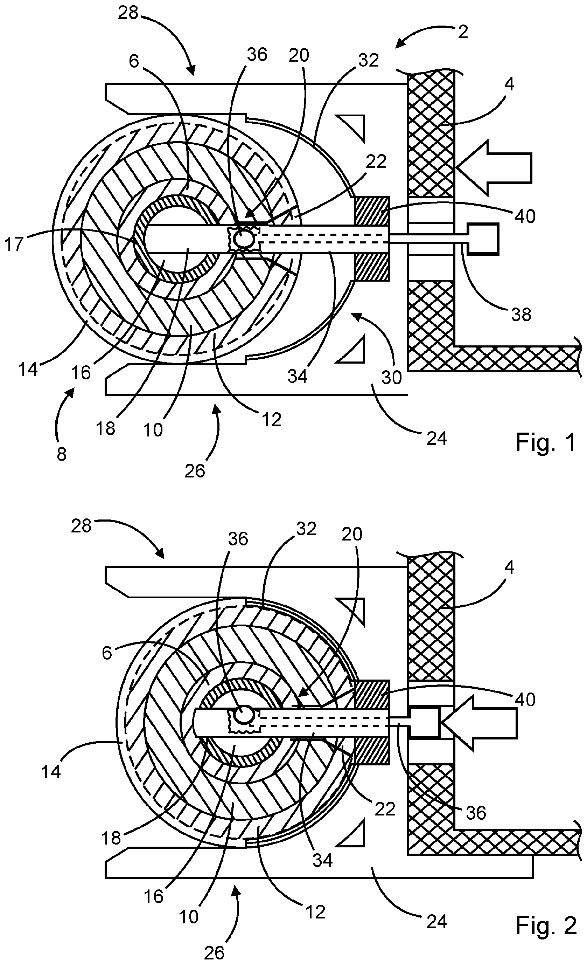

Fig. 1 zeigt eine Befestigungsvorrichtung 2, die an einer Ausstattungskomponente 4 angeordnet ist und diese mit einem Befestigungsrohr 6 einer Anbindungsstruktur 8 einer Luftfahrzeugkabine verbinden kann. Das Befestigungsrohr 6 weist einen hohlzylindrischen Querschnitt auf und ist hier in einer Schnittdarstellung senkrecht zu seiner Längsachse.

Eine erste Buchse 10 ist an dem Befestigungsrohr 6 angeordnet und drehfest mit diesem verbunden. Hierauf befindet sich eine Gewindehülse 12, die ein Außengewinde 14 umfasst. Die Gewindehülse 12 ist drehbar an der ersten Hülse 10 gelagert, sodass sich die Gewindehülse 12 ohne Einwirkung anderer Komponenten frei um die erste Hülse 10 drehen kann.

Im Innern des Befestigungsrohrs 6 ist ein Zylinderbuchsenelement 16 angeordnet, das eine quer zu der Längsachse verlaufende Aufnahmebuchse 18 umfasst. Das Zylinderbuchsenelement 16 kann mit einer elastischen Masse 17 in dem Befestigungsrohr 6 verklebt sein und hierbei leicht nachgiebig positioniert sein. Alternativ kann eine Torsionsfeder zum flexiblen Halten des Zylinderbuchsenelements 16 vorgesehen sein. In fluchtender Ausrichtung mit dem Zylinderbuchsenelement 16 weist das Befestigungsrohr 6 eine Queröffnung 20 auf, durch die sich ein Zugang durch die erste Hülse 10 und die Gewindehülse 12 ergibt. Eine Öffnung 22 in der Gewindehülse 14 kann sich von der ersten Hülse 10 nach außen hin etwas aufweiten.

Die Befestigungsvorrichtung 2 weist zudem einen Haltekörper 24 auf, der mit der Ausstattungskomponente 4 verschraubt ist. Er weist einen ersten Schenkel 26 und einen parallel und beabstandet dazu angeordneten zweiten Schenkel 28 auf. Die beiden Schenkel 26 und 28 schließen eine Auflagefläche 30 ein, an der ein Innengewinde 32 angeordnet ist. Das Innengewinde 32 ist komplementär zu dem Außengewinde 14 ausgebildet. Zudem ist die Auflagefläche 30 derart gestaltet, dass sie mit der äußeren Form der Gewindehülse 12 korreliert. Folglich kann der Haltekörper 24 an die Gewindehülse 12 herangeschoben werden, wobei durch die beiden Schenkel 26 und 28 eine automatische Zentrierung des Haltekörpers 24 zu dem Befestigungsrohr 6 erfolgt. Fluchten die beiden Gewinde 32 und 14 jedoch nicht vollständig, kann sich die Gewindehülse 12 leicht um die Längsachse herum drehen, bis die jeweiligen Gewindeflanken bündig zueinander ausgerichtet sind. Die Gewinde 32 und 14 sind daher so ausgebildet, dass keine Selbsthemmung entsteht und folglich beim Aufschieben des Haltekörpers 24 stets ein Verdrehen der Gewindehülse 12 erfolgt und sich die Gewinde 32 und 14 folglich zueinander ausrichten.

Radial von außen kann ein Kugelsperrbolzen 34 durch die Öffnung 22 der Gewindehülse 12 und die Queröffnung 20 des Befestigungsrohrs 6 in die Aufnahmebuchse 18 des Zylinderbuchsenelements 16 eingebracht werden. Da sich die Gewindehülse 12 zum Ausrichten der Gewindeflanken um einen kleinen Winkelbetrag drehen kann, ist die Öffnung 22 der Gewindehülse 12 in radialer Richtung hierzu etwas aufgeweitet. Eine in dem Kugelsperrbolzen 34 befindliche Kugel 36 ist beim Einschieben durch eine Betätigungseinrichtung 38 in einer eingefahrenen bzw. gelösten Stellung, sodass der Kugelsperrbolzen 14 ohne Widerstand in die Aufnahmebuchse 18 einführbar ist.

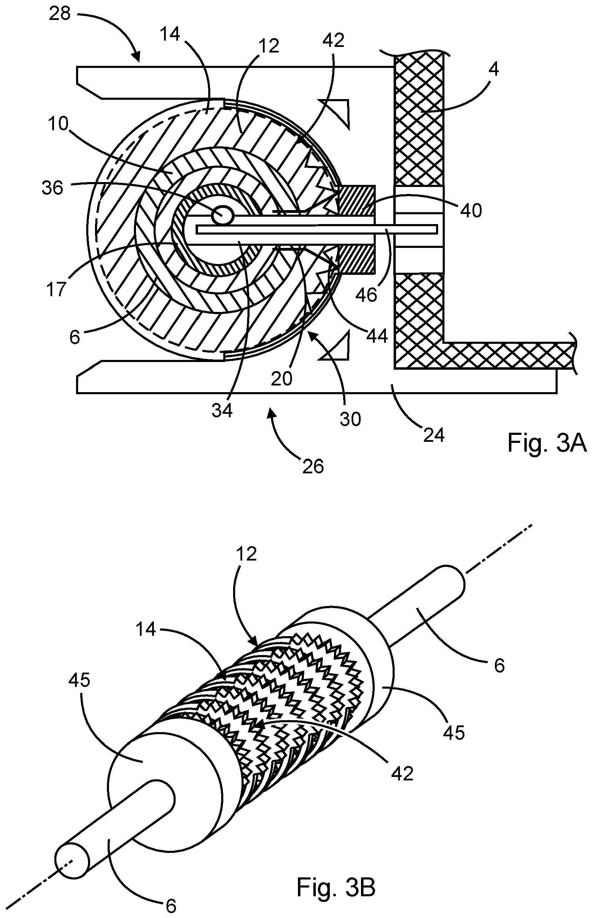

Ferner kann die Gewindehülse 12 mehrere, in Längsrichtung verlaufende Rillen aufweisen, die mit einer Zahnplatte 40 in Formschluss gebracht werden kann, um einer Drehung der Gewindehülse 12 entgegenzuwirken. Dieses Prinzip ist näher in den Fig. 3a und 3b erläutert. Die Zahnplatte 40 ist beispielhaft in dem Haltekörper 24 angeordnet und erreicht das Außengewinde 14 dann, wenn der Haltekörper 24 vollständig aufgeschoben ist. Der besondere Vorteil der Befestigungsvorrichtung 2 liegt darin, dass eine automatische Zentrierung erfolgt, gleichzeitig ein stufenloser Toleranzausgleich erreicht wird und eine rasche Befestigung realisierbar ist. Die Gewinde 32 und 14 verlaufen bündig ineinander, sodass dadurch eine Kraft entlang der Längsachse des Befestigungsrohrs übertragen werden kann.

In Fig. 2 ist der Haltekörper 24 vollständig an die Gewindehülse 12 geschoben und der Kugelsperrbolzen 34 ist vollständig in das Zylinderbuchsenelement 16 eingebracht. Die Betätigungseinrichtung 38 ist zudem in den Kugelsperrbolzen 34 hineingeschoben, sodass die Kugel 36 in radialer Richtung nach außen gedrückt wird. Damit wird der Kugelsperrbolzen 34 mit dem Zylinderbuchsenelement 16 verbunden. Gleichzeitig wird die Zahnplatte 40 auf die Rillen (siehe Fig. 3a und 3b) des Außengewindes 14 gedrängt und der Haltekörper 24 wird durch den Kugelsperrbolzen 34 an der Gewindehülse 12 gehalten.

In Fig. 3a und 3b wird die Gewindehülse 12 mit darin angeordneten Längsschlitzen 42 gezeigt. Diese verlaufen auf einem Teil der Gewindehülse 12 und erstrecken sich parallel zu der Längsachse des Befestigungsrohrs 6. Die Zahnplatte 40 weist mit den Schlitzen 42 korrespondierende Zähne 44 auf, die beim Anbringen des Kugelsperrbolzens 34 bzw. beim Heranführen des Haltekörpers 24 mit den Schlitzen 42 in Eingriff geraten. Dann wird die Gewindehülse 12 vor weiterer Verdrehung geschützt.

In Fig. 3b werden zudem in einer schematischen, dreidimensionalen Ansicht axiale Anschläge 45 gezeigt, die mit dem Befestigungsrohr 6 verbunden sind und dazu ausgebildet sind, die Gewindehülse 12 in ihrer axialen Position zu halten. In einer besonders einfachen Form könnten dies auch Sicherungsringe oder ein Rastmechanismus sein, wie etwa in DE102020108392A1 gezeigt.

In Fig. 3a ist zudem in den Kugelsperrbolzen 34 ein elektrischer Antrieb 46 in Form eines Bauteils aus einem EAP (elektroaktives Polymer) integriert. Durch Anlegen einer geeigneten Spannung kann das Bauteil 46 komprimiert werden, sodass es sich von der Kugel 36 zurückzieht. Wird die Spannung an dem Bauteil 46 jedoch abgezogen, expandiert es wieder und die Kugel 36 wird in die ausgefahrene Stellung zurückgedrängt. Die Spannung könnte etwa an einem Anschluss angelegt werden, der bei der Montage von innerhalb der Ausstattungskomponente erreichbar und nach der Montage abdeckbar ist. Der Anschluss könnte hierfür etwa in einer Vertiefung oder einem Ausschnitt der Ausstattungskomponente angeordnet sein.

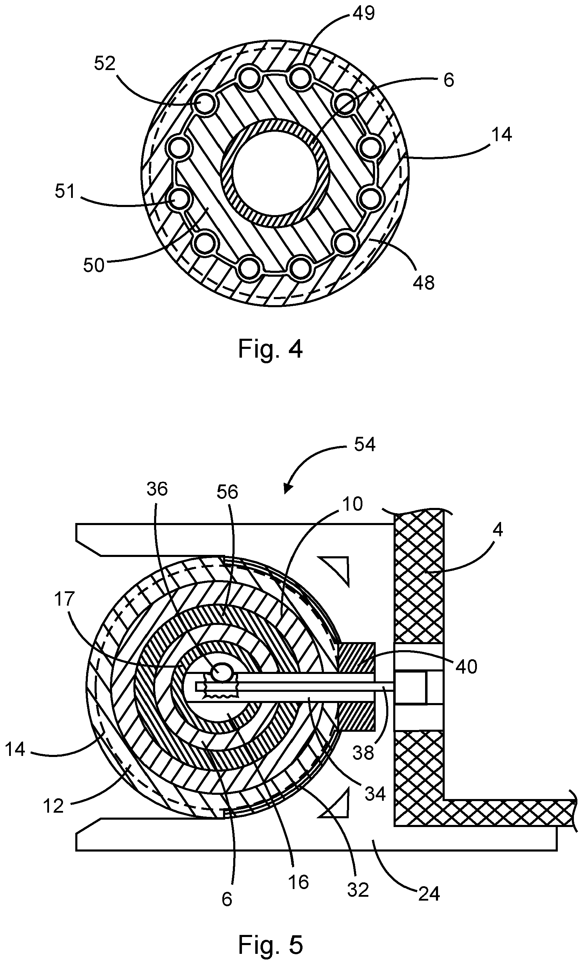

In Fig. 4 wird eine andere Variante einer Verdrehsicherung der Gewindehülse 12 dargestellt. Hier weist die Gewindehülse 48 an ihrem inneren Umfang Längsrillen 49 auf. Eine erste Hülse 50 weist an ihrem äußeren Umfang Längsrillen 51 auf. Der Außendurchmesser der ersten Hülse 50 entspricht dabei im Wesentlichen dem Innenumfang der Gewindehülse 48. Die beiden Hülsen 48 und 50 können sich folglich gegeneinander verdrehen. Wird jedoch mindestens ein Stift 52 in zwei miteinander fluchtenden Längsrillen 49 und 51 gebracht, sind die beiden Elemente gegeneinander verdrehgesichert.

Andere Ausführungen, welche ebenso mit Bauteilen aus elektroaktivem Polymer kombinierbar sind, sind denkbar.

In Fig. 5 wird eine Befestigungsvorrichtung 54 basierend auf dem Ausführungsbeispiel aus Fig. 1 und 2 mit einer Modifikation gezeigt. Hier ist ein zusätzlicher, hülsenförmiger Schockabsorber 56 aus einem elastischen Material vorgesehen, der zwischen dem Befestigungsrohr 6 und der ersten Hülse 10 angeordnet ist. Damit wird das Einleiten von Belastungsstößen von der Ausstattungskomponente 4 in das Befestigungsrohr 6 noch weiter verringert.

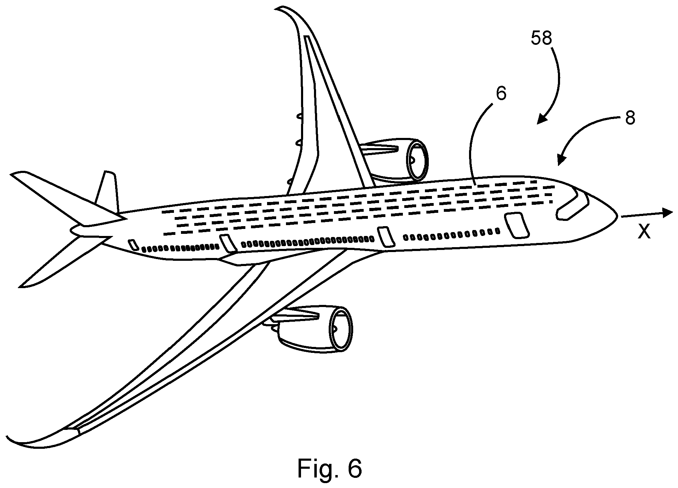

Schließlich zeigt Fig. 6 ein Flugzeug 58, das eine Anbindungsstruktur 8 mit mehreren, parallel zu einer Längsachse x verlaufenden Befestigungsrohren 6 aufweist. Hieran sind Ausstattungskomponenten 4 mittels einer Befestigungsvorrichtung 2 bzw. 54 anbringbar.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, soweit sie in den Umfang der beigefügten Ansprüche fallen. Bezugszeichen in den Ansprüchen sind nicht als Einschränkung anzusehen.

### Bezugszeichenliste

- 2: Befestigungsvorrichtung
- 4: Ausstattungskomponente
- 6: Befestigungsrohr
- 8: Anbindungsstruktur
- 10: erste Hülse
- 12: Gewindehülse
- 14: Außengewinde
- 16: Zylinderbuchsenelement
- 17: elastische Masse
- 18: Aufnahmebuchse
- 20: Queröffnung
- 22: Öffnung
- 24: Haltekörper
- 26: erster Schenkel
- 28: zweiter Schenkel
- 30: Auflagefläche
- 32: Innengewinde
- 34: Kugelsperrbolzen
- 36: Kugel
- 38: Betätigungseinrichtung
- 40: Zahnplatte
- 42: Längsschlitz
- 44: Zähne
- 45: axialer Anschlag
- 46: Bauteil / EAP
- 48: Gewindehülse
- 49: Längsrille
- 50: erste Hülse
- 51: Längsrille
- 52: Stift
- 54: Befestigungsvorrichtung
- 56: Schockabsorber
- 58: Flugzeug

## Patentansprüche

1. Befestigungsvorrichtung (2, 54) zum Befestigen einer Ausstattungskomponente (4) an einer Anbindungsstruktur (8) einer Luftfahrzeugkabine, wobei die Anbindungsstruktur (8) mindestens ein Befestigungsrohr (6) mit einer Längsachse aufweist, die Befestigungsvorrichtung (2, 54) aufweisend:
eine Gewindehülse (12, 48), die eine Innenbohrung aufweist, mit der Innenbohrung drehbar auf dem Befestigungsrohr (6) positionierbar ist und ein Außengewinde (14) aufweist,
einen mit der Ausstattungskomponente (4) verbindbaren Haltekörper (24) mit zwei voneinander beabstandeten Schenkeln (26, 28) und eine von den Schenkeln (26, 28) eingeschlossene Auflagefläche (30), an der ein an das Außengewinde (14) der Gewindehülse (12, 48) angepasstes Innengewinde (32) angeordnet ist, und
eine Fixiereinrichtung zum Fixieren des Haltekörpers (24) an der Gewindehülse (12, 48) und dem Befestigungsrohr (6),
wobei das Außengewinde (14) und das Innengewinde (32) nicht selbsthemmend sind, sodass beim Andrücken des Innengewindes (32) des Haltekörpers (24) auf das Außengewinde (14) der Gewindehülse (12, 48) die Gewindehülse (12, 48) rotiert, bis das Außengewinde (14) und das Innengewinde (32) miteinander fluchten, und
wobei die Fixiereinrichtung dazu ausgebildet ist, die Gewindehülse (12, 48) drehfest mit dem Haltekörper (24) zu verbinden und den Haltekörper (24) quer zu der Längsachse des Befestigungsrohrs (6) zu fixieren.

2. Befestigungsvorrichtung (2, 54) nach Anspruch 1,
wobei die Gewindehülse (12, 48) in Axialrichtung an dem Befestigungsrohr (6) fixiert ist.

3. Befestigungsvorrichtung (2, 54) nach Anspruch 1 oder 2,
wobei das Befestigungsrohr (6) eine Queröffnung (20) aufweist,
wobei die Fixiereinrichtung ein Zylinderbuchsenelement (16) aufweist, das in dem Befestigungsrohr (6) angeordnet ist und eine zu der Längsachse quer verlaufende Aufnahmebuchse (18) umfasst, und
wobei die Fixiereinrichtung einen Kugelsperrbolzen (34) aufweist, der durch den Haltekörper (24), die Gewindehülse (12, 48) und die Queröffnung (20) in die Aufnahmebuchse (18) einführbar und darin fixierbar ist.

4. Befestigungsvorrichtung (2, 54) nach Anspruch 3,
wobei der Kugelsperrbolzen (34) eine Kugel (36) aufweist, die mittels eines aktiven, elektrisch betreibbaren Antriebs (46) in eine gelöste Stellung bringbar ist und dazu ausgebildet ist, in eine gesperrte Stellung zurückzudrängen.

5. Befestigungsvorrichtung (2, 54) nach Anspruch 4,
wobei der Antrieb (46) ein elektroaktives Polymer umfasst, das mit einer Spannungsquelle verbindbar ist, sodass ein Einstecken des Kugelsperrbolzens (34) in das Zylinderbuchsenelement (16) ermöglicht wird.

6. Befestigungsvorrichtung (2, 54) nach einem der vorhergehenden Ansprüche,
wobei die Gewindehülse (12, 48) mehrere Längsschlitze (42) in dem Außengewinde (14) umfasst, die parallel zu der Längsachse verlaufen, und
wobei die Fixiereinrichtung eine Zahnplatte (40) aufweist, die quer zu der Längsachse auf die Längsschlitze (42) bewegbar ist.

7. Befestigungsvorrichtung (2, 54) nach Anspruch 3,
wobei das Zylinderbuchsenelement (16) in das Befestigungsrohr (6) mittels einer biegeweichen, elastischen Masse eingeklebt ist.

8. Kabine für ein Luftfahrzeug (58), aufweisend mindestens eine Ausstattungskomponente (4), die mittels mindestens einer Befestigungsvorrichtung (2, 54) nach einem der vorhergehenden Ansprüche in der Kabine befestigt ist.

9. Luftfahrzeug (58), aufweisend mindestens eine Befestigungsvorrichtung (2, 54) nach einem der Ansprüche 1 bis 7 und/oder mindestens eine Kabine nach Anspruch 8.

## Claims

1. Fastening apparatus (2, 54) for fastening a furnishing component (4) to an attachment structure (8) of an aircraft cabin, the attachment structure (8) having at least one fastening tube (6) with a longitudinal axis, the fastening apparatus (2, 54) having:
a threaded sleeve (12, 48) which has an inner bore, can be positioned rotatably on the fastening tube (6) by means of the inner bore and has an external thread (14),
a holding body (24) which can be connected to the furnishing component (4) and which has two spaced-apart limbs (26, 28) and a bearing surface (30) which is enclosed by the limbs (26, 28) and on which an internal thread (32) adapted to the external thread (14) of the threaded sleeve (12, 48) is arranged, and
a fixing device for fixing the holding body (24) to the threaded sleeve (12, 48) and the fastening tube (6),
the external thread (14) and the internal thread (32) not being of self-locking form, with the result that when the internal thread (32) of the holding body (24) is pressed against the external thread (14) of the threaded sleeve (12, 48), the threaded sleeve (12, 48) rotates until the external thread (14) and the internal thread (32) are aligned with one another, and
the fixing device being configured to connect the threaded sleeve (12, 48) to the holding body (24) in a rotationally fixed manner and to fix the holding body (24) transversely with respect to the longitudinal axis of the fastening tube (6).

2. Fastening apparatus (2, 54) according to Claim 1, the threaded sleeve (12, 48) being fixed in an axial direction to the fastening tube (6).

3. Fastening apparatus (2, 54) according to Claim 1 or 2,
the fastening tube (6) having a transverse opening (20), the fixing device having a cylinder bushing element (16) which is arranged in the fastening tube (6) and which comprises a receiving bushing (18) running transversely with respect to the longitudinal axis, and
the fixing device having a ball lock pin (34) which can be inserted through the holding body (24), the threaded sleeve (12, 48) and the transverse opening (20) into the receiving bushing (18) and be fixed therein.

4. Fastening apparatus (2, 54) according to Claim 3, the ball lock pin (34) having a ball (36) which can be brought into a released position by means of an active, electrically operable drive (46) and which is configured to push back into a blocked position.

5. Fastening apparatus (2, 54) according to Claim 4, the drive (46) comprising an electroactive polymer which can be connected to a voltage source, such that insertion of the ball lock pin (34) into the cylinder bushing element (16) is made possible.

6. Fastening apparatus (2, 54) according to one of the preceding claims,
the threaded sleeve (12, 48) comprising a plurality of longitudinal slots (42) in the external thread (14) which run parallel to the longitudinal axis, and
the fixing device having a toothed plate (40) which can be moved transversely with respect to the longitudinal axis onto the longitudinal slots (42).

7. Fastening apparatus (2, 54) according to Claim 3, the cylinder bushing element (16) being adhesively bonded into the fastening tube (6) by means of a pliable elastic compound.

8. Cabin for an aircraft (58), having at least one furnishing component (4) which is fastened in the cabin by means of at least one fastening apparatus (2, 54) according to one of the preceding claims.

9. Aircraft (58) having at least one fastening apparatus (2, 54) according to one of Claims 1 to 7 and/or at least one cabin according to Claim 8.

## Revendications

1. Dispositif de fixation (2, 54) pour fixer un composant d'équipement (4) à une structure d'attache (8) d'une cabine d'aéronef, la structure d'attache (8) présentant au moins un tube de fixation (6) avec un axe longitudinal, comprenant le dispositif de fixation (2, 54) présentant :
un manchon fileté (12, 48) qui présente un alésage intérieur, peut être positionné de manière rotative sur le tube de fixation (6) avec l'alésage intérieur et présente un filetage extérieur (14),
un corps de retenue (24) pouvant être relié au composant d'équipement (4) avec deux branches (26, 28) espacées l'une de l'autre et une surface d'appui (30) entourée par les branches (26, 28), sur laquelle est agencé un filetage intérieur (32) adapté au filetage extérieur (14) du manchon fileté (12, 48), et
un appareil de fixation pour fixer le corps de retenue (24) sur le manchon fileté (12, 48) et le tube de fixation (6),
le filetage extérieur (14) et le filetage intérieur (32) n'étant pas autobloquants, de telle sorte que lorsque le filetage intérieur (32) du corps de retenue (24) est pressé sur le filetage extérieur (14) du manchon fileté (12, 48), le manchon fileté (12, 48) tourne jusqu'à ce que le filetage extérieur (14) et le filetage intérieur (32) soient alignés, et
l'appareil de fixation étant configuré pour relier le manchon fileté (12, 48) au corps de retenue (24) sans possibilité de rotation et pour fixer le corps de retenue (24) transversalement à l'axe longitudinal du tube de fixation (6).

2. Dispositif de fixation (2, 54) selon la revendication 1,
dans lequel le manchon fileté (12, 48) est fixé dans la direction axiale sur le tube de fixation (6).

3. Dispositif de fixation (2, 54) selon la revendication 1 ou 2,
dans lequel le tube de fixation (6) présente une ouverture transversale (20),
dans lequel l'appareil de fixation présente un élément de douille cylindrique (16) qui est agencé dans le tube de fixation (6) et comprend une douille de réception (18) s'étendant transversalement à l'axe longitudinal, et
dans lequel l'appareil de fixation présente un boulon de blocage à bille (34) qui peut être inséré dans la douille de réception (18) et fixé dans celle-ci à travers le corps de retenue (24), le manchon fileté (12, 48) et l'ouverture transversale (20).

4. Dispositif de fixation (2, 54) selon la revendication 3,
dans lequel le boulon de blocage à bille (34) présente une bille (36) qui peut être amenée dans une position libérée au moyen d'un entraînement actif pouvant être actionné électriquement (46) et qui est configurée pour être repoussée dans une position bloquée.

5. Dispositif de fixation (2, 54) selon la revendication 4,
dans lequel l'actionneur (46) comprend un polymère électroactif qui peut être relié à une source de tension de manière à permettre une insertion du boulon de blocage à bille (34) dans l'élément de douille de cylindre (16).

6. Dispositif de fixation (2, 54) selon l'une quelconque des revendications précédentes,
dans lequel le manchon fileté (12, 48) comprend plusieurs fentes longitudinales (42) dans le filetage extérieur (14) qui s'étendent parallèlement à l'axe longitudinal, et
dans lequel l'appareil de fixation présente une plaque dentée (40) qui est mobile transversalement à l'axe longitudinal sur les fentes longitudinales (42).

7. Dispositif de fixation (2, 54) selon la revendication 3,
dans lequel l'élément de douille de cylindre (16) est collé dans le tube de fixation (6) au moyen d'une masse élastique souple à la flexion.

8. Cabine pour un aéronef (58), présentant au moins un composant d'équipement (4) fixé dans la cabine au moyen d'au moins un dispositif de fixation (2, 54) selon l'une quelconque des revendications précédentes.

9. Aéronef (58), présentant au moins un dispositif de fixation (2, 54) selon l'une quelconque des revendications 1 à 7 et/ou au moins une cabine selon la revendication 8.
